# EUROPÄISCHE PATENTSCHRIFT

(11) **EP 3 515 771 B1**
(45) Veröffentlichungstag und Bekanntmachung des Hinweises auf die Patenterteilung: **19.08.2020**
(21) Anmeldenummer: 17758848.0
(22) Anmeldetag: 22.08.2017
(51) Int. Cl.: B60T 13/68

(54) **PARKBREMSEINRICHTUNG FÜR EIN NUTZFAHRZEUG**
PARKING BRAKE DEVICE FOR A UTILITY VEHICLE
SYSTÈME DE FREIN DE STATIONNEMENT POUR VÉHICULE UTILITAIRE

(30) Priorität: 21.09.2016 DE 102016117784
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: SCHNITTGER, Karsten, 80935 München (DE); GRIESSER, Fabian, 80803 München (DE)
(86) Internationale Anmeldenummer: PCT/EP2017/071160
(87) Internationale Veröffentlichungsnummer: WO 2018/054636

(56) Entgegenhaltungen:
- EP-A1- 1 785 325
- WO-A1-2011/147861
- WO-A2-2008/101592

## Beschreibung

Die vorliegende Erfindung betrifft eine Parkbremseinrichtung für ein Nutzfahrzeug mit wenigstens einer Steuerventileinrichtung, mit wenigstens einem Relaisventil, mit wenigstens einer pneumatischen Bremsvorrichtung und mit wenigstens einem Anhängersteuermodul, wobei mittels der Steuerventileinrichtung das Relaisventil steuerbar ist und wobei mittels des Relaisventils wenigstens die pneumatische Bremsvorrichtung ansteuerbar ist.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Es sind sowohl rein pneumatisch betriebene Parkbremsen bekannt, die mit vom Fahrer zu betätigenden, meist bistabilen Parkbremsventilen betrieben werden, als auch elektro-pneumatische Anlagen mit einem bistabilen elektromechanischen Ventil, das durch ein elektromechanisches bistabiles Magnetventil gesteuert wird. Beide Ventilstellungen für "Parkbremse" und "Lösen" müssen dabei "stabil" sein, d. h. ohne Einwirkung einer Person in der jeweils gewählten Stellung bleiben. Dies gilt auch für einen Ausfall einer elektrischen Stromversorgung für die Magnetventile.

Aus der WO 2008/101592 A2 ist ein Feststellbremsmodul für eine druckmittelbetriebene Bremsanlage eines Fahrzeuges mit einer Feststellbremsfunktion mit wenigstens einem Federspeicherbremszylinder bekannt. Das Feststellbremsmodul weist eine erste, druckmittelmengenverstärkende Ventileinrichtung mit einem Einlass auf, der mit einem Druckmittelvorratsbehälter verbindbar ist, und mit einem Auslass, der mit wenigstens einem Federspeicherteil eines Federspeicherbremszylinders verbindbar ist. Hier ist eine Bypassleitung stromabwärts des Relaisventils vor den Federspeicherbremszylindern vorgesehen, die zum Anhängersteuerventil führt.

Aus der EP 1 785 325 A1 ist ein Steuergerät für eine Druckbremsanlage eines Kraftfahrzeugs bekannt, wobei das Steuergerät mit einem Eingangsanschluss für Steuersignale, einem Eingangsanschluss für eine Druckluftversorgung, eine zu einem Anhängersteuerventil führenden Ausgangsanschluss und einem Zugfederspeicherbremszylinder des Kraftfahrzeugs für den Ausgangsanschluss versehen ist.

Aus der DE 10 2009 059 816 A1 ist bereits eine gattungsgemäße Parkbremseinrichtung für Kraftfahrzeuge bekannt, bei der die Anhängersteuermodule im Bereich der Steuerleitungen für die Betriebsbremse des Kraftfahrzeugs angeordnet sind.

Nachteilig am bisherigen Stand der Technik ist das variierende Verhalten der elektrischen Parkbremse abhängig von den fahrzeugspezifisch unterschiedlichen Verrohrungslängen vom Steuerraum hin zu den Anhängersteuermodulen.

Aus der DE 10 2013 006 860 A1 ist weiter ein pneumatisches System für Kraftfahrzeuge bekannt, bei dem z.B. im Zusammenhang mit einer gattungsgemäßen Parkbremseinrichtung ein Magnetventil der Luftaufbereitung auch für die Realisierung einer sog. Trailer-Test-Funktion zur Ansteuerung eines Anhängersteuermoduls mitbenutzt wird.

Da die Leitungslänge zum Anhängersteuerventil bei verschiedenen Fahrzeugtypen variiert, kann außerdem das Volumen der Steuerleitung für die Elektronische Parkbremse somit diesen Schwankungen unterworfen sein. Es kann also ein kleines Volumen der Steuerleitung vorliegen, was einen schnellen Druckaufbau und Druckabbau in der Steuerleitung ergibt. Falls aber ein großes Volumen der Steuerleitung vorliegt, ergibt sich ein langsamerer Druckaufbau und Druckabbau in der Steuerleitung. Somit ist das Regelungsverhalten der Elektronischen Parkbremse aufwendig und schwierig abzustimmen um den einwandfreien Betrieb zu gewährleisten.

Es ist daher die Aufgabe der vorliegenden Erfindung, eine Parkbremseinrichtung für ein Nutzfahrzeug der eingangs genannten Art in vorteilhafter Weise weiterzubilden, insbesondere dahingehend, dass das Regelungsverhalten einer Parkbremseinrichtung, insbesondere einer Elektronischen Parkbremse, einfacher abstimmbar und leichter einstellbar auszugestalten ist sowie weiter die Ansteuerung des Anhängers und seiner Bremseinrichtung einfacher auszugestalten.

Diese Aufgabe wird erfindungsgemäß gelöst durch eine Parkbremseinrichtung für Nutzfahrzeuge mit den Merkmalen des Anspruchs 1. Danach ist vorgesehen,

Parkbremseinrichtung für ein Nutzfahrzeug mit wenigstens einer Steuerventileinrichtung, mit wenigstens einem Relaisventil, mit wenigstens einer pneumatischen Bremsvorrichtung und mit wenigstens einem Anhängersteuermodul versehen ist, wobei mittels der Steuerventileinrichtung das Relaisventil steuerbar ist und wobei mittels des Relaisventils wenigstens die pneumatische Bremsvorrichtung ansteuerbar ist, wobei stromaufwärts des Anhängersteuermoduls ein Ventil vorsehen ist, das einen ersten Anschluss und einen zweiten Anschluss und einen dritten Anschluss aufweist, wobei an den zweiten Anschluss eine zweite Verbindungsleitung angeschlossen ist, die das Ventil mit der Steuerventileinrichtung verbindet, wobei an den dritten Anschluss eine dritte Verbindungsleitung angeschlossen ist, die das Anhängersteuermodul mit dem Ventil verbindet, wobei an den ersten Anschluss eine erste Verbindungsleitung angeschlossen ist, die an eine erste Leitung angebunden ist, die stromabwärts des Relaisventils angeordnet ist.

Bei der Parkbremseinrichtung für ein Nutzfahrzeug kann es sich insbesondere um eine elektronische Parkbremseinrichtung für ein Nutzfahrzeug handeln.

Die Erfindung basiert auf dem Grundgedanken, dass es für die Ansteuerung der Parkbremsfunktion des Anhängersteuermoduls ausreichend ist, den Steueranschluss des Anhängersteuermoduls zur Ansteuerung der Parkbremseinrichtung eines Anhängers des Nutzfahrzeug für den Fahrbetrieb und Parkbetrieb ausschließlich über den hinter dem Relaisventil in den Zuleitungen zu den Federspeichern der Parkbremse herrschenden Druck, d.h. im Wesentlichen über den Druck aus den Federspeichern der Parkbremse des Nutzfahrzeugs anzusteuern. Ein Anschluss an die Steuerleitungen zu Ansteuerung des Relaisventils kann somit entfallen und ein einfacherer Aufbau wird hierdurch möglich. Damit ist die Leitung zum Anhängersteuerventil, die für unterschiedliche Fahrzeuge bzw. Fahrzeugtypen verschiedene Längen haben kann, nicht mehr an die Steuerleitung des Relaisventils gekoppelt, sondern an die Federspeicher. Das Steuervolumen für die Parkbremseinrichtung kann somit einen konstanten Wert aufweisen. Damit kann die Regelung der Parkbremseinrichtung vereinfacht werden. Zudem kann die Leitungslänge zu dem Anhängersteuermodul mit weniger Einschränkungen variiert werden.

Die zweite Verbindungsleitung verbindet das Ventil insbesondere direkt mit der Steuerventileinrichtung (d.h. es ist beispielsweise kein weiteres Ventil mehr in der zweiten Verbindungsleitung zwischen Ventil und Steuerventileinrichtung angeordnet).

Das Ventil kann ein 3/2-Wege-Ventil sein.

Des Weiteren kann vorgesehen sein, dass das Ventil ein Magnetventil ist. Dies ermöglicht eine genau einstellbare Charakteristik des Ventils und einen zuverlässigen Betrieb des Ventils. Außerdem ist der Einsatz bzw. Einbau derartiger Ventile kostengünstig.

Darüber hinaus ist denkbar, dass das Ventil pneumatisch angesteuert wird. Mit diesem Standardaufbau kann die Anforderung an das Ventil realisiert werden. Der Einsatz von Standardbauteilen bzw. Normbauteilen ist kostengünstig und zudem auch im Hinblick auf lange Standzeiten von Vorteil.

Das Ventil kann einen ersten Steueranschluss aufweist, wobei der erste Steueranschluss mittels einer ersten Abzweigungsleitung an die zweite Verbindungsleitung angeschlossen ist. Dadurch wird es möglich, den Druck in der zweiten Verbindungsleitung auch zur Ansteuerung des Ventils zu benutzen. Übersteigt der Druck in der zweiten Verbindungsleitung einen vorgebbaren oder vorgegebenen Schwellwert, so schaltet das Ventil. Es kann vorgesehen, dass das Ventil in dieser Stellung so lange gehalten wird, wie der anliegende Druck oberhalb des Schwellwerts liegt. Grundsätzlich denkbar wäre aber auch, dass das Ventil stabil in dieser Stellung gehalten wird und erst durch Anlegen eines anderen Steuersignals an einem anderen Steueranschluss des Ventils ein Schalten des Ventils erfolgt.

Darüber hinaus ist erfindungsgemäß vorgesehen, dass das Ventil einen zweiten Steueranschluss aufweist, wobei der zweite Steueranschluss mittels einer zweiten Abzweigungsleitung an die erste Verbindungsleitung angeschlossen ist. Analog wie bei ersten Steueranschluss wird es hierdurch möglich, den Druck in der ersten Verbindungsleitung auch zur Ansteuerung des Ventils zu benutzen. Übersteigt der Druck in der ersten Verbindungsleitung einen vorgebbaren oder vorgegebenen Schwellwert, so schaltet das Ventil. Es kann vorgesehen, dass das Ventil in dieser Stellung so lange gehalten wird, wie der anliegende Druck oberhalb des Schwellwerts liegt. Grundsätzlich denkbar wäre aber auch, dass das Ventil stabil in dieser Stellung gehalten wird und erst durch Anlegen eines anderen Steuersignals an einem anderen Steueranschluss des Ventils ein Schalten des Ventils erfolgt.

Außerdem kann vorgesehen sein, dass das Ventil wenigstens einen ersten Schaltzustand aufweist, bei dem der erste Anschluss mit dem dritten Anschluss verbunden ist, derart, dass an einem Steueranschluss des Anhängersteuermoduls der Druck aus der ersten Verbindungsleitung anliegt. Dadurch ergibt sich der Vorteil, dass in diesem Zustand das Ventil ausschließlich pneumatisch mit dem Bereich der Parkbremseinrichtung verbunden ist, der stromabwärts des Relaisventils liegt. Hierdurch ergibt sich eine Entkopplung von den stromaufwärts des Relaisventils liegenden Leitungssystems der Parkbremseinrichtung, das zur Ansteuerung der (bistabilen) Steuerventileinrichtung und auch des Relaisventils dient. Die Leitungslängen bzw. Länge der Verrohrung wird deutlich im Vergleich zu derzeitigen System verringert und auch der Aufbau und die Anordnung der Leitungen stromaufwärts des Relaisventils wird wesentlich vereinfacht.

Insbesondere kann vorgesehen sein, dass wenigstens im ersten Schaltzustand die erste Verbindungsleitung mit wenigstens einem Federspeicher der Parkbremse des Nutzfahrzeugs verbunden ist, so dass die erste Verbindungsleitung durch den wenigstens einen Federspeicher bedruckt ist. Hierdurch wird es möglich, den ohnehin vorhandenen Druck in den Federspeichern des Nutzfahrzeugs vorhandenen Druck für die Ansteuerung und Betätigung des Anhängersteuermoduls zu nutzen. Dieser Zustand wird insbesondere beim Parken des Nutzfahrzeugs verwendet.

Das Ventil kann wenigstens einen zweiten Schaltzustand aufweist, bei dem der zweite Anschluss mit dem dritten Anschluss verbunden ist, derart, dass an einem Steueranschluss des Anhängersteuermoduls der Druck aus der zweiten Verbindungsleitung anliegt. Somit kann das Anhängersteuermodul angesteuert werden und zwar ohne hierzu die Parkbremse des Nutzfahrzeugs lösen zu müssen. Denn durch diese Ansteuerungsmöglichkeit kann das Anhängersteuermodul unabhängig von der Ansteuerung der Federspeicher bzw. unabhängig vom Druck in den Federspeichern angesteuert werden.

Denn im Zustand Parken soll eine 'Trailer Test' genannte Funktion aktiviert werden können, mit der das Drucksignal zum Anhängersteuermodul separat gesteuert werden kann. Für die Dauer des 'Trailer Tests' wird hierzu die Steuerleitung zum Anhängersteuermodul für die Parkbremsfunktion des Anhängers mit Druckluft befüllt (anstatt entlüftet zu sein), während die Federspeicher weiter entlüftet sind. Hierdurch kann überprüft werden, ob die Parkbremse des Zugfahrzeugs alleine das Gespann aus Zugfahrzeug und Anhänger am Hang gebremst halten kann, falls die Betriebsbremswirkung am Anhänger nicht mehr vorliegt. Dazu wird beim Trailer Test bei eingelegter Parkbremse des LKW die Betriebsbremse des Anhängers gelöst, indem die Steuerleitung des Anhängersteuerventils mit Druckluft versorgt wird. Der Fahrer prüft ob das Gespann rollt. Nur wenn dies nicht der Fall ist, dann kann das Gespann an dieser Stelle abgestellt werden.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Ansicht eines Ausführungsbeispiels einer erfindungsgemäßen Parkbremseinrichtung im Zustand "Parken";
- Fig. 2: die Parkbremseinrichtung gem. Fig. 1 im Zustand "Trailer Test";
- Fig. 3: die Parkbremseinrichtung gem. Fig. 1 im Zustand "Fahren";
- Fig. 4: die Parkbremseinrichtung gem. Fig. 1 im Zustand "Graduable" (deutsch: "graduell"); und
- Fig. 5: eine schematische Schnittdarstellung ein Ausführungsbeispiel eines Schieberventils für die Parkbremseinrichtung gem. Fig. 1.

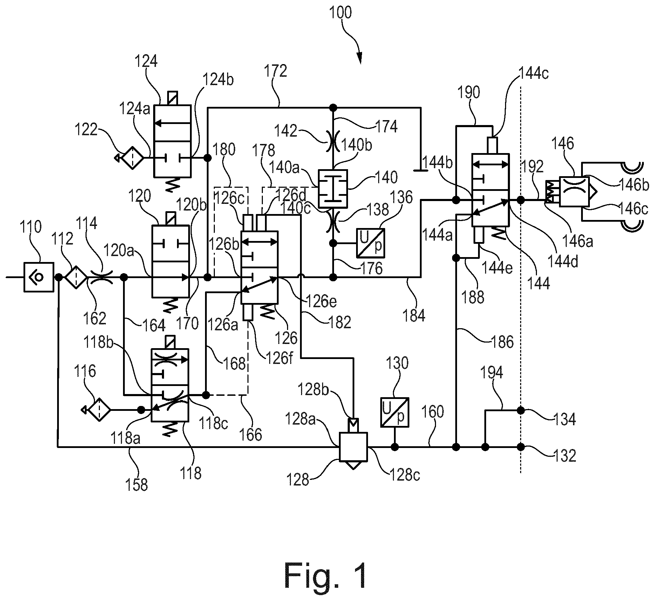

**Fig. 1** zeigt in einer schematischen Ansicht ein Ausführungsbeispiel einer erfindungsgemäßen Parkbremseinrichtung 100 im Zustand "Parken".

Die Parkbremseinrichtung 100 weist eine nicht näher dargestellte Druckluftquelle wie beispielsweise einen Kompressor des Nutzfahrzeugs auf, die an die Leitung stromaufwärts des Rückschlagventils 110 angeschlossen ist.

Stromabwärts des Rückschlagventils 110 sind ein Filter 112 und eine Drossel 114 in der Leitung 162 angeordnet.

Zwischen Filter 112 und Rückschlagventil 110 zweigt eine Druckluftversorgungsleitung 158 ab.

Die Parkbremseinrichtung 100 weist weiter ein 3/2-Magnetventil 118, ein 2/2-Magnetventil 120, ein weiteres 2/2-Magnetventil 124 und eine Steuerventileinrichtung 126 auf.

Außerdem ist ein Relaisventil 128 vorgesehen. Das Relaisventil 128 weist Anschlüsse 128a und 128c sowie einen Steueranschluss 128b auf. Das Relaisventil 128 ist auch mit einem Entlüftungsausgang versehen.

Das Magnetventil 118 weist Anschlüsse 118a, 118b, 118c auf. An den Anschluss 118a ist eine Entlüftungsleitung mit einem Filter 116 angeschlossen. Der Anschluss 118b ist an eine Leitung 164 angeschlossen, die von der Leitung 162 abzweigt. Der Anschluss 118c ist weiter an eine Leitung 168 angeschlossen.

Das Magnetventil 120 weist Anschlüsse 120a und 120b auf. Der Anschluss 120a ist dabei an die Leitung 162 angeschlossen. Der Anschluss 120a ist an eine Leitung 170 angeschlossen, die den Anschluss 120a mit einem Anschluss 126b der Steuerventileinrichtung 126 verbunden.

Das Magnetventil 124 weist Anschlüsse 124a und 124b auf. Der Anschluss 124a ist an eine Entlüftungsleitung mit einem Filter 122 angeschlossen.

Die Steuerventileinrichtung 126 ist Bi-Stabilventil in der Parkbremseinrichtung 100 vorgesehen und angeordnet und hier als pneumatisches 3/2-Wege-Ventil ausgebildet. Die Steuerventileinrichtung 126 weist Anschlüsse 126a, 126b und 126e auf.

Der Anschluss 126a ist an eine Leitung 168 angeschlossen, wodurch das Magnetventil 118 mit der Steuerventileinrichtung 126 verbunden werden kann. Eine Leitung 170 ist an den Anschluss 126b angeschlossen, wodurch das Magnetventil 120 mit der Steuerventileinrichtung 126 verbunden werden kann. Eine Leitung 184 ist an den Anschluss 126e angeschlossen.

Außerdem weist die Steuerventileinrichtung 126 Steueranschlüsse 126c, 126d, 126f auf. Der Steueranschluss 126c ist an eine Steuerleitung 180 angeschlossen, die wiederum von der Leitung 170 abzweigt.

Der Steueranschluss 126d ist an die Steuerleitung 178 angeschlossen. Im Bereich des Steueranschlusses 126d und des einen Endes der Steuerleitung 128 ist auch die Leitung 182 angeschlossen, die mit einem Steueranschluss 128b des Relaisventils 128 verbunden ist.

Der Steueranschluss 126f ist an eine Steuerleitung 166 angeschlossen, die von der Leitung 168 abzweigt.

Von der Leitung 184 zeigt eine Leitung 174, 176 ab, in der in dieser Reihenfolge eine Drossel 138, ein Select-Low-Ventil 140 und eine Drossel 142 angeordnet ist. Die Leitung 174 führt dann zur einer Leitung 172, die wiederum über eine Abzweigung mit dem Anschluss 124b des Magnetventils 124 verbunden ist und mit der Leitung 170 ebenfalls in Verbindung steht. Von der Leitung 176 zweigt auch eine Abzweigungsleitung zu einem Druckmesser 136 ab.

Das Select-Low-Ventil 140 weist Anschlüsse 140a, 140b und 140c auf.

Der Anschluss 140a ist mit der Steuerleitung 178 verbunden.

Der Anschluss 128a des Relaisventils 128 ist mit der Druckluftversorgungsleitung 158 verbunden. Der Anschluss 128c des Relaisventils 128 ist mit einer Leitung 160 verbunden, von der direkt stromabwärts des Relaisventils 128 eine Abzweigungsleitung angeordnet ist, die zu einem Druckmesser 130 führt.

Stromabwärts des Druckmessers 130 zweigt zunächst eine Leitung bzw. Verbindungsleitung 186 ab und danach die Anschlüsse 132 und 134, u.A. zu den Federspeichern der Parkbremse des Nutzfahrzeugs. Der Anschluss 134 ist dabei über die Leitung 194 angebunden.

Die Parkbremseinrichtung weist ein Anhängersteuermodul 146 auf. Das Anhängersteuermodul 146 weist einen Steueranschluss 146a für die Parkbremsfunktion des Anhängers, sowie Anschlüsse 146b, 146c zu den Anhängerbremsen auf.

Der Steueranschluss 146a ist über eine Leitung 192 mit einem Ventil 144 verbunden, mittels dessen das Anhängersteuermodul 146 hinsichtlich seiner Schaltzustände ansteuerbar ist.

Das Ventil 144 ist als pneumatisches 3/2-Wege-Ventil ausgebildet.

Das Ventil 144 weist Anschlüsse 144a, 144b und 144d sowie Steueranschlüsse 144c, 144e auf.

Der Anschluss 144a ist mit der Leitung 186 verbunden. Von der Leitung 186 zweigt auch eine Steuerleitung bzw. Abzweigungsleitung 188 ab, die mit dem Steueranschluss 144e verbunden ist.

Der Anschluss 144a ist somit an eine erste Verbindungsleitung 186 angeschlossen, die an eine erste Leitung 160 angebunden ist, die stromabwärts des Relaisventils 128 angeordnet ist.

Der Anschluss 144b ist mit der Leitung 184 verbunden. Von der Leitung 184 zweigt auch eine Steuerleitung bzw. Abzweigungsleitung 190 ab, die mit dem Steueranschluss 144c verbunden ist.

Die Funktion der Parkbremseinrichtung 100 lässt sich wie folgt beschreiben:
Fig.1 zeigt den Zustand der Parkbremseinrichtung 100 im "Parken".

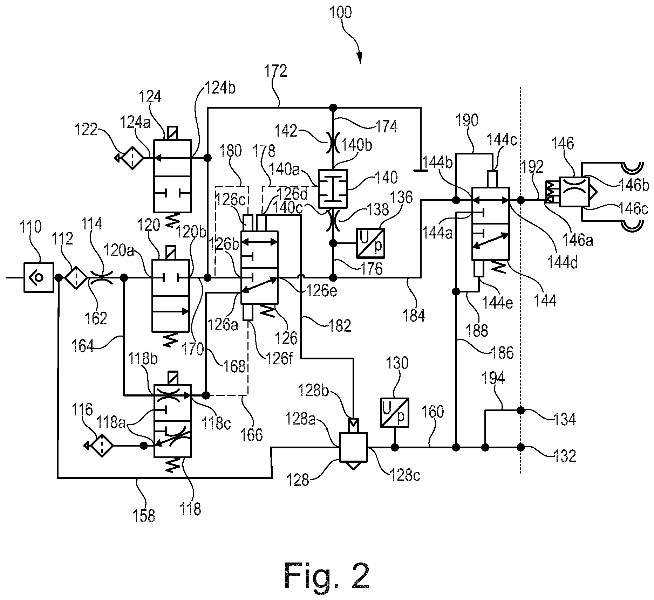

**Fig. 2** zeigt in einer schematischen Ansicht die Parkbremseinrichtung 100 gem. Fig. 1 im Zustand "Trailer Test".

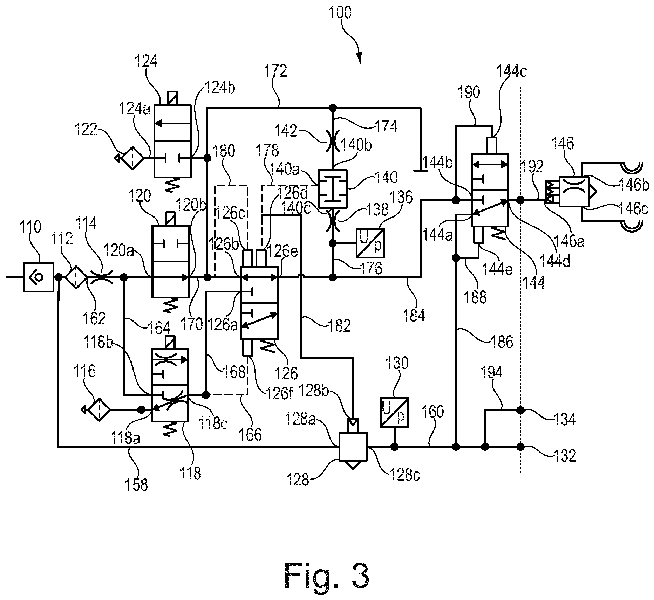

**Fig. 3** zeigt in einer schematischen Ansicht die Parkbremseinrichtung 100 gem. Fig. 1 im Zustand "Fahren".

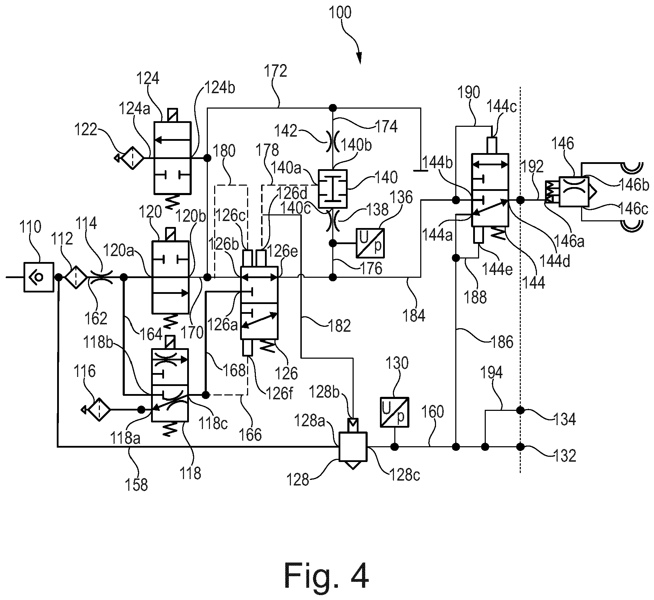

**Fig. 4** zeigt in einer schematischen Ansicht die Parkbremseinrichtung 100 gem. Fig. 1 im Zustand "Graduable" (deutsch: "graduell").

Die Parkbremseinrichtung 100 steuert die Parkbremsfunktion für das Nutzfahrzeug als auch für den Anhänger.

Dazu wird in der Parkbremseinrichtung 100 ein Steuerdrucksignal erzeugt, das die Stellung eines bistabilen Ventils, also der Steuerventileinrichtung 126, das auch ohne Elektrizität die aktuelle Stellung beibehält, schaltet.

Die zwei Hauptschaltzustände sind dabei wie folgt:
- Parken (siehe Fig. 1): Unter einem bestimmten Schwellwert des Drucksignals ist das bistabile Ventil in der Stellung '0' (nicht betätigter Schaltzustand des Ventils) für den Parkzustand.
- Fahren (siehe Fig. 3): Über einem bestimmten Schwellwert des Drucksignals ist das bistabile Ventil in der Stellung '1'(betätigter Schaltzustand des Ventils) für den Fahrzustand.

Für die Parkbremsfunktion des Nutzfahrzeugs werden Federspeicher-Bremszylinder mittels des Relaisventils 128, welches mit obigem Steuerdrucksignal angesteuert wird, mit Druckluft befüllt oder entlüftet:
Dabei sind im Zustand "Parken" (siehe Fig. 1) die Federspeicher entlüftet.

Im Zustand "Fahren" (siehe Fig. 3) sind die Federspeicher belüftet. Hierzu wird die Druckluft über das Ventil 120 in die Leitung 172 und die Leitung 170 eingeleitet. Die Steuerventileinrichtung 126 ist in Stellung 1, so dass der Anschluss 126b mit dem Anschluss 126c verbunden ist. Die Steuerventileinrichtung 126 ist somit "durchgeschaltet".

Der Druck in der Leitung 172 ist höher als nach der Steuerventileinrichtung 126, so dass das Select-Low-Ventil 140 in Richtung des Anschlusses 140c und der Leitung 176 hin geöffnet ist. Über den Anschluss 140c strömt Druckluft zum Anschluss 140a und von dort zur Steuerleitung 178 und 182. Hierdurch wird der Steueranschluss 128b des Relaisventils 128 betätigt und "durchgeschaltet". Damit ist die Druckluftversorgungsleitung 158 mit der Leitung 160 verbunden und es liegt Druck an den Anschlüssen 132 und 134 an und die Federspeicher des Nutzfahrzeugs sind belüftet.

Zur Steuerung der Parkbremsfunktion des Anhängers kann die Steuerleitungen 192 für das Anhängersteuermodul 146 be- und entlüftet werden.

Dabei ist im Zustand "Parken" (siehe Fig. 1) die Steuerleitung 192 des Anhängersteuermoduls 146 entlüftet. Die Betriebsbremsen des Anhängers sind wegen des inversen Übertragungsverhaltens des Anhängersteuermoduls belüftet.

Im Zustand "Fahren" (siehe Fig. 3) die Steuerleitung 192 des Anhängersteuermoduls 146 belüftet. Die Betriebsbremsen des Anhängers belüftet.

Das Ventil 144 befindet sich dann in einem ersten Schaltzustand, bei dem der erste Anschluss 144a mit dem dritten Anschluss 144d verbunden ist, derart, dass an einem Steueranschluss 146a des Anhängersteuermoduls 146 der Druck aus der ersten Verbindungsleitung 186 anliegt. Im ersten Schaltzustand ist dann die erste Verbindungsleitung 186 mit wenigstens einem Federspeicher der Parkbremse des Nutzfahrzeugs verbunden ist, so dass die erste Verbindungsleitung 186 durch den wenigstens einen Federspeicher bedruckt ist.

Im Parken muss die "Trailer Test" Funktion (siehe Fig. 2) aktiviert werden können, damit der Fahrer prüfen kann, ob die Parkbremse des Zugfahrzeugs alleine das Gespann aus Zugfahrzeug und Anhänger am Hang gebremst halten kann, falls die Betriebsbremswirkung am Anhänger nicht mehr vorliegt.

Dazu wird beim Trailer Test bei eingelegter Parkbremse des Nutzfahrzeugs die Betriebsbremse des Anhängers gelöst, indem die Steuerleitung des Anhängersteuermoduls 146 mit Druckluft versorgt wird. Der Fahrer prüft ob, das Gespann rollt. Nur wenn dies nicht der Fall ist, dann kann das Gespann an dieser Stelle abgestellt werden.

Die Parkbremseinrichtung 100 ermöglicht es, im Parken eine "Trailer Test" zu aktivieren, mit der das Drucksignal zum Anhängersteuermodul 146 separat gesteuert werden kann.

Für die Dauer des "Trailer Tests" muss die Steuerleitung zum Anhängersteuermodul 146 mit Druckluft befüllt werden, statt entlüftet zu sein, während die Federspeicher weiter entlüftet sind.

Hierzu dient das Ventil 144, welches den Druck am Anschluss 144b als Steuerdruck für das Ventil 144 nutzt (über die Steuerleitung 190 und den Steueranschluss 144c). Übersteigt der Druck an der Einlassseite einen Schwellwert, dann schaltet das Ventil 144.

In einer ersten Grundstellung ("Parken", Fig. 1) ist der Anschluss 144b verschlossen und der Anschluss 144a mit Anschluss 144d verbunden. Das Ventil 144 wird durch eine Feder in dieser ersten Position gehalten.

In einer zweiten geschalteten Stellung ("Trailer Test", Fig. 3) hält der am Anschluss 144b vorliegende Druck das Ventil 144 gegen die Federkraft in dieser Stellung. Der Anschluss 144b ist mit Anschluss 144d verbunden, während der Anschluss 144a verschlossen ist.

Das Ventil 144 wird so in der pneumatischen Verschaltung für die elektronische Parkbremseinrichtung 100 angeordnet, so dass Anschluss 144a des Ventils 144 mit den Federspeichern der Parkbremse des Nutzfahrzeuges verbunden ist. Anschluss 144d ist mit der Steuerleitung 192 des Anhängersteuermoduls 146 verbunden.

Die pneumatische Verschaltung für die elektronische Parkbremseinrichtung 100 ist so ausgeführt, dass es möglich ist Anschluss 144b mit Druckluft zu versorgen, während die Federspeicher entlüftet sind.

Das Ventil 144 befindet sich dann in einem Schaltzustand, bei dem der zweite Anschluss 144b mit dem dritten Anschluss 144d verbunden ist, derart, dass an einem Steueranschluss 146a des Anhängersteuermoduls 146 der Druck aus der zweiten Verbindungsleitung 184 anliegt.

Das Ventil 144 kann als Schieberventil 144 ausgebildet sein.

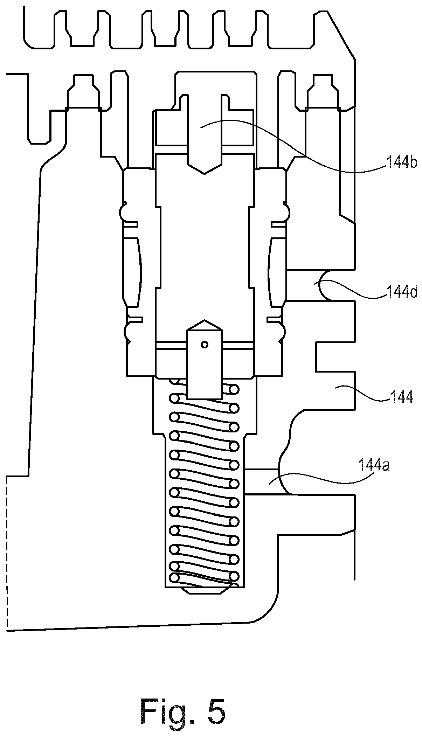

**Fig. 5** zeigt in schematischer Schnittdarstellung ein Ausführungsbeispiel eines Schieberventils 144 mit den Anschlüssen 144a, 144b, 144d.

### BEZUGSZEICHENLISTE

- 100: Parkbremseinrichtung
- 110: Rückschlagventil
- 112: Filter
- 114: Drossel
- 116: Filter
- 118: Magnetventil
- 118a: Anschluss
- 118b: Anschluss
- 118c: Anschluss
- 120: Magnetventil
- 120a: Anschluss
- 120b: Anschluss
- 122: Filter
- 124: Magnetventil
- 124a: Anschluss
- 124b: Anschluss
- 126: Magnetventil
- 126a: Anschluss
- 126b: Anschluss
- 126c: Steueranschluss
- 126d: Steueranschluss
- 126e: Anschluss
- 126f: Steueranschluss
- 128: Relaisventil
- 128a: Anschluss
- 128b: Steueranschluss
- 128c: Anschluss
- 130: Druckmesser
- 132: Anschluss
- 134: Anschluss
- 136: Druckmesser
- 138: Drossel
- 140: Select-Low-Ventil
- 140a: Anschluss
- 140b: Anschluss
- 140c: Anschluss
- 142: Drossel
- 144: Ventil
- 144a: Anschluss
- 144b: Anschluss
- 144c: Steueranschluss
- 144d: Anschluss
- 144e: Steueranschluss
- 146: Anhängersteuermodul
- 146a: Steueranschluss
- 146b: Anschluss
- 146c: Anschluss
- 158: Druckluftversorgungsleitung
- 160: Leitung
- 162: Leitung
- 164: Leitung
- 166: Steuerleitung
- 168: Leitung
- 170: Leitung
- 172: Leitung
- 174: Leitung
- 176: Leitung
- 178: Steuerleitung
- 180: Steuerleitung
- 182: Steuerleitung Relaisventil
- 184: Leitung
- 186: Verbindungsleitung
- 188: Steuerleitung, Abzweigungsleitung
- 190: Steuerleitung, Abzweigungsleitung
- 192: Leitung

## Patentansprüche

1. Parkbremseinrichtung (100) für ein Nutzfahrzeug mit wenigstens einer Steuerventileinrichtung (126), mit wenigstens einem Relaisventil (128), mit wenigstens einer pneumatischen Bremsvorrichtung und mit wenigstens einem Anhängersteuermodul (146), wobei mittels der Steuerventileinrichtung (126) das Relaisventil (128) steuerbar ist und wobei mittels des Relaisventils (128) wenigstens die pneumatische Bremsvorrichtung ansteuerbar ist, wobei stromaufwärts des Anhängersteuermoduls ein Ventil (144) vorsehen ist, das einen ersten Anschluss (144a) und einen zweiten Anschluss (144b) und einen dritten Anschluss (144d) aufweist, wobei an den zweiten Anschluss (144b) eine zweite Verbindungsleitung (184) angeschlossen ist, die das Ventil (144) mit der Steuerventileinrichtung (126) verbindet, wobei an den dritten Anschluss (144d) eine dritte Verbindungsleitung (192) angeschlossen ist, die das Anhängersteuermodul (146) mit dem Ventil (144) verbindet, **wobei** an den ersten Anschluss (144a) eine erste Verbindungsleitung (186) angeschlossen ist, die an eine erste Leitung (160) angebunden ist, die stromabwärts des Relaisventils (128) angeordnet ist, wobei das Ventil (144) einen zweiten Steueranschluss (144e) aufweist, wobei der zweite Steueranschluss (144e) mittels einer zweiten Abzweigungsleitung (188) an die erste Verbindungsleitung (186) angeschlossen ist, wobei die erste Leitung (160) die Leitung zwischen dem Relaisventil (128) und der pneumatischen Bremsvorrichtung ist.

2. System (1) nach Anspruch 1,
**dadurch gekennzeichnet, dass**
das Ventil (144) ein 3/2-Wege-Ventil ist.

3. System (1) nach Anspruch 1 oder Anspruch 2,
**dadurch gekennzeichnet, dass**
das Ventil (144) ein Magnetventil ist.

4. System (1) nach einem der vorhergehenden Ansprüche,
**dadurch gekennzeichnet, dass**
das Ventil (144) einen ersten Steueranschluss (144c) aufweist, wobei der erste Steueranschluss (144c) mittels einer ersten Abzweigungsleitung (190) an die zweite Verbindungsleitung (184) angeschlossen ist.

5. System (1) nach einem der vorhergehenden Ansprüche,
**dadurch gekennzeichnet, dass**
das Ventil (144) wenigstens einen ersten Schaltzustand aufweist, bei dem der erste Anschluss (144a) mit dem dritten Anschluss (144d) verbunden ist, derart, dass an einem Steueranschluss (146a) des Anhängersteuermoduls (146) der Druck aus der ersten Verbindungsleitung (186) anliegt.

6. System (1) nach Anspruch 5,
**dadurch gekennzeichnet, dass**
wenigstens im ersten Schaltzustand die erste Verbindungsleitung (186) mit wenigstens einem Federspeicher der Parkbremse des Nutzfahrzeugs verbunden ist, so dass in dieser ersten Verbindungsleitung (186) der gleiche Druck herrscht wie im Federspeicher.

7. System (1) nach einem der vorhergehenden Ansprüche,
**dadurch gekennzeichnet, dass**
das Ventil (144) wenigstens einen zweiten Schaltzustand aufweist, bei dem der zweite Anschluss (144b) mit dem dritten Anschluss (144d) verbunden ist, derart, dass an einem Steueranschluss (146a) des Anhängersteuermoduls (146) der Druck aus der zweiten Verbindungsleitung (184) anliegt.

## Claims

1. A parking brake device (100) for a utility vehicle having at least one control valve device (126), having at least one relay valve (128), having at least one pneumatic brake device and having at least one trailer control module (146), it being possible to control the relay valve (128) by means of the control valve device (126) and to actuate at least the pneumatic brake device by means of the relay valve (128), there being provided upstream of the trailer control module a valve (144) that a first port (144a) and a second port (144b) and a third port (144d), there being connected to the second port (144b) a second connecting line (184) that connects the valve (144) to the control valve device (126), there being connected to the third port (144d) a third connecting line (192) that connects the trailer control module (146) to the valve (144), there being connected to the first port (144a) a first connecting line (186) that is attached to a first line (160) arranged downstream of the relay valve (128), the valve (144) having a second control port (144e), this second control port (144e) being connected to the first connecting line (186) by means of a second branch line (188), the first line (160) being the line between the relay valve (128) and the pneumatic brake device.

2. A system (1) according to claim 1,
**characterised in that**
the valve (144) is a 3/2-way valve.

3. A system (1) according to claim 1 or claim 2,
**characterised in that**
the valve (144) is a solenoid valve.

4. A system (1) according to any one of the preceding claims,
**characterised in that**
the valve (144) has a first control port (144c), this the first control port (144c) being connected to the second connecting line (184) by means of a first branch line (190).

5. A system (1) according to any one of the preceding claims,
**characterised in that**
the valve (144) has at least a first switching state in which the first port (144a) is connected to the third port (144d) such that the pressure from the first connecting line (186) prevails at a control port (146a) of the trailer control module (146).

6. A system (1) according to claim 5,
**characterised in that,**
in the first switching state at least, the first connecting line (186) is connected to at least one spring accumulator of the parking brake of the utility vehicle such that the pressure prevailing in the first connecting line (186) is the same as in the spring accumulator.

7. A system (1) according to any one of the preceding claims,
**characterised in that**
the valve (144) has at least one second switching state in which the second port (144b) is connected to the third port (144d) in such a manner that the pressure from the second connecting line (184) prevails at a control port (146a) of the trailer control module (146).

## Revendications

1. Système (100) de frein de stationnement d'un véhicule utilitaire, comprenant au moins un dispositif (126) de vanne de commande, comprenant au moins une vanne (128) relais, comprenant au moins une installation pneumatique de frein et comprenant au moins un module (146) de commande de remorque, dans lequel la vanne (128) relais peut être commandée au moyen du dispositif (126) de vanne de commande et dans lequel au moins l'installation pneumatique de frein peut être commandée au moyen de la vanne (128) relais, dans lequel, en amont du module de commande de remorque, est prévue une vanne (144), qui a un premier raccord (144a) et un deuxième raccord (144b) et un troisième raccord (144d), dans lequel, au deuxième raccord (144b), est raccordé un deuxième conduit (184) de liaison, qui relie la vanne (144) au dispositif (126)'de vanne de commande, dans lequel, au troisième raccord (144d), est raccordé un troisième conduit (192) de liaison, qui relie le module (146) de commande de remorque à la vanne (144), dans lequel, au premier raccord (144a) est raccordé un premier conduit (186) de liaison, qui est relié à un premier conduit (160), qui est disposé en aval de la vanne (128) relais, dans lequel la vanne (144) a un deuxième raccord (144e) de commande, dans lequel le deuxième raccord (144e) de commande est raccordé au premier conduit (186) de liaison au moyen d'un deuxième conduit (188) de dérivation, dans lequel le premier conduit (160) est le conduit entre la vanne (128) relais et l'installation pneumatique de frein.

2. Système (1) suivant la revendication 1,
**caractérisé en ce que**
la vanne (144) est une vanne à 3/2 voies.

3. Système (1) suivant la revendication 1 ou la revendication 2,
**caractérisé en ce que**
la vanne (144) est une électrovanne.

4. Système (1) suivant l'une des revendications précédentes,
**caractérisé en ce que**
la vanne (144) a un premier raccord (144c) de commande, le premier raccord (144c) de commande étant raccordé au deuxième conduit (184) de liaison au moyen d'un premier conduit (190) de dérivation.

5. Système (1) suivant l'une des revendications précédentes,
**caractérisé en ce que**
la vanne (144) a au moins un premier état de commutation, dans lequel le premier raccord (144a) est relié au troisième raccord (144d) de manière à appliquer à un raccord (146a) de commande du module (145) de commande de remorque la pression dans le premier conduit (186) de liaison.

6. Système (1) suivant la revendication 5,
**caractérisé en ce qu'**
au moins dans le premier état de commutation, le premier conduit (186) de liaison est relié à au moins un accumulateur à ressort du frein de stationnement du véhicule utilitaire de manière à ce qu'il règne, dans ce premier conduit (186) de liaison, la même pression que dans l'accumulateur à ressort.

7. Système (1) suivant l'une des revendications précédentes,
**caractérisé en ce que**
la vanne (144) a au moins un deuxième état de commutation, dans lequel le deuxième raccord (144b) est relié au troisième raccord (144d) de manière à appliquer à un raccord (146a) de commande du module (146) de commande de remorque la pression dans le deuxième conduit (184) de liaison.
